# EUROPÄISCHE PATENTSCHRIFT

(11) **EP 0 527 345 B1**
(45) Veröffentlichungstag und Bekanntmachung des Hinweises auf die Patenterteilung: **15.01.1997**
(21) Anmeldenummer: 92111948.3
(22) Anmeldetag: 14.07.1992
(51) Int. Cl.: B65G 39/02, B65G 13/07

(54) **Tragrolle für Förderanlagen, insbesondere Skidanlagen**
Supporting roll for conveyor system, in particular for devices with skids
Rouleau d'appui pour installation de transport, en particulier pour dispositifs à patins

(30) Priorität: 14.08.1991 DE 4126822
(43) Veröffentlichungstag der Anmeldung: 17.02.1993
(73) Patentinhaber: BLEICHERT FÖRDERANLAGEN GmbH, D-74706 Osterburken (DE)
(72) Erfinder: Beck, Rüdiger#, W-6962 Adelsheim# (DE)
(74) Vertreter: Rüger, Rudolf, Dr.-Ing.

(56) Entgegenhaltungen:
- EP-A- 0 009 508
- EP-A- 0 255 620
- DE-A- 3 408 125
- US-A- 3 808 658
- US-A- 4 416 650

## Beschreibung

Die Erfindung betrifft eine Tragrolle für Förderanlagen, mit einer Achse, mit einem auf der Achse über Lagermittel drehbar gelagerten Tragelement und mit einem koaxialen, eine Antriebsverzahnung zur formschlüssigen Kupplung mit einem endlosen Antriebsmittel aufweisenden Antriebselement für das Tragelement, sowie mit wenigstens einem ring- oder rohrförmigen Lauf- und/oder Führungselement.

Zum Beispiel bei Rollenbahnen für sogenannte Skids werden Tragrollen verwendet, die häufig auch als Friktionsrollen oder -walzen ausgebildet sind und deren Antrieb heute durchweg durch endlose Antriebsmittel in Gestalt von Zahnriemen erfolgt, die in eine entsprechende Antriebsverzahnung eines ein Antriebselement bildenden Zahnritzels eingreifen. Bei einer bspw. aus der DE-OS 40 07 707 bekannten solchen Rollenbahn für Skids ist das Zahnritzel drehfest mit einer Hohlwelle verbunden, die über Radiallager auf einer Steckachse drehbar gelagert ist und auf der mittels einer Friktionsbuchse ein Tragelement in Form einer Staurolle gelagert ist. Die Staurolle trägt als Laufelement einen aufgegossenen Laufring (Bandage) aus einem kautschukelastischen Material auf Polyurethanbasis, das mit den Skidkufen eine zweckentsprechende Reibpaarung ergibt. Die Staurolle selbst besteht aus einem massiven zylindrischen Metallkörper, an den auf einer Seite eine Bordscheibe angeformt ist.

In der Praxis sind daneben auch eine Vielfalt anderer Tragrollenkonstruktionen bekannt geworden, bei denen z.B. das Antriebsritzel unmittelbar an der Tragrolle ausgebildet ist, die den aufgegossenen Laufring aus Polyurethan trägt. Dieser Laufring wurde auch schon auf eine aus Stahl bestehende Büchse aufgegossen, die ihrerseits dann auf die Laufrolle aufgepreßt wurde. Bei einer anderen Bauart einer Tragrolle sind zwei als verhältnismäßig komplizierte Formteile ausgebildete Zahnritzel jeweils einenends in ein Mantelrohr eingesteckt und mit diesem verschweißt. Auf das Mantelrohr sind Führungselemente in Gestalt von Spurkranzringen aufgesetzt, die mit dem Mantelrohr ebenfalls durch Schweißnähte verbunden sind. Das Ganze ist schließlich auf einer durchgehenden Achse mittels Radiallagern drehbar gelagert, die im Bereiche der beiden Antriebsritzel angeordnet sind.

Allen diesen Tragrollen oder -walzen ist gemeinsam, daß sie für den speziellen Einsatzzweck jeweils maßgefertigt sind und daß ein Austausch verschleißgefährdeter Teile, wie Spurkränze, Bordscheiben, Antriebsritzel, Laufringe und dergl. entweder gar nicht oder nur mit beträchtlichem Aufwand möglich ist.

Aus der US-A-4 416 650 ist eine Anordnung für eine Fördereinrichtung bekannt, die aus einem Laufelement und einem Antriebselement besteht, das einstückig aus einem Nabenteil und einem Kettenrad gebildet ist. Das Nabenteil ist zur Lagerung auf einer Welle oder Achse eingerichtet und weist eine Außenverzahnung auf, in die eine entsprechende Innenverzahnung des Laufelementes formschlüssig eingreift. Der Antrieb der Anordnung erfolgt mittels einer Kette, über die von der Verzahnung des Nabenteiles verschiedene Verzahnung des Kettenrades. Das Laufelement ist zu seiner axialen Fixierung auf dem Nabenteil so verrastet, daß es aufgesteckt, aber nicht mehr abgezogen werden kann. Dies erschwert den Austausch verschlissener Teile. Die Tatsache, daß auf dem Antriebselement verschiedene Verzahnungen vorgesehen sind, erhöht den Fertigungsaufwand.

Aufgabe der Erfindung ist es deshalb, eine Tragrolle zu schaffen, die sich durch eine preisgünstige Herstellungsmöglichkeit und einfache Wartung auszeichnet.

Zur Lösung dieser Aufgabe ist die eingangs genannte Tragrolle erfindungsgemäß dadurch gekennzeichnet, daß auf das Antriebselement Lauf- und/oder Führungselemente aufgesetzt sind, die formschlüssig in eine Außenverzahnung des Antriebselementes eingreifen und die durch Haltemittel axial fixiert sind, und daß die Außenverzahnung des Antriebselementes dessen Antriebsverzahnung ist.

Damit ist erreicht, daß die Funktionsteile wie Lauf- und/oder Führungselemente unabhängig von der für den jeweiligen Einsatzzweck erforderlichen Länge der Tragrolle, d.h. der Breite der Förderbahn, hergestellt und montiert werden können. Die Außenverzahnung des Antriebselementes erlaubt es dabei, diese Elemente jeweils lagerichtig zu positionieren, ohne daß dazu Einzelanfertigungen des Antriebselementes oder komplizierte Bearbeitungsvorgänge an diesem erforderlich wären. Die Tatsache, daß die die Lauf- und/oder Führungselemente aufnehmende Außenverzahnung des Antriebselementes gleichzeitig dessen Antriebsverzahnung ist, ermöglicht es die Herstellung weiter zu vereinfachen.

Abhängig von der Zweckbestimmung der Tragrolle kann diese derart ausgebildet sein, daß das Tragelement unmittelbar durch das rohrförmige Antriebselement gebildet ist, doch kann das rohrförmige Antriebselement auch auf ein das Tragelement bildendes Tragrohr aufgesetzt und mit diesem drehfest und axial unverschieblich verbunden sein. Insbesondere bei der letztgenannten Ausführungsform kann auch das Antriebselement selbst als vorgefertigtes Standardteil in großen Stückzahlen und damit sehr preisgünstig hergestellt werden, so daß sich insgesamt ein modularer und vormontierbarer Aufbau der ganzen Tragrolle ergibt. Dabei ist es zweckmäßig, wenn das Antriebselement lösbar mit dem Tragrohr verbunden ist, so daß es bei Verschleiß etwa der Antriebsverzahnung ausgetauscht werden kann.

In einer bevorzugten Ausführungsform kann das Antriebselement in Gestalt eines zumindest außenverzahnten Profilrohres, beispielsweise als Strangpreßteil, etwa aus einem Leichtmetall oder einem Kunststoff hergestellt sein. Von diesem Profilrohr können dann den jeweiligen Antriebselementen entsprechende Abschnitte abgelängt werden. Dies erlaubt auch eine wesentliche Vereinfachung der Vorratshaltung.

Bei Ausführungsformen, bei denen, wie erwähnt, das Antriebselement auf ein Tragrohr aufgesetzt ist, kann es auch mit dem Tragrohr durch wenigstens einen Spannring verspannt sein, wodurch sich sehr einfache Verhältnisse hinsichtlich der Montage und der Justierung ergeben.

Um die reibschlüssige Mitnahme der zu transportierenden Stückgüter, bspw. Paletten oder Skids, sicherzustellen, ist es bekannt, bei Tragrollen Laufringe oder -büchsen zu verwenden, die - wie eingangs erläutert - bspw. aus einem kautschukähnlichen Kunststoff auf Polyurethanbasis bestehen. Durch diese Kunststofflaufringe oder -büchsen wird gleichzeitig auch eine gewisse Geräuschdämmung erreicht. Bei der neuen Tragrolle kann die Anordnung nunmehr derart getroffen werden, daß auf das außenverzahnte Antriebselement als Laufelement wenigstens ein aus einem vorbestimmte Reibungseigenschaften aufweisenden Kunststoff bestehender Laufring oder eine entsprechende Laufbüchse aufgesetzt ist, der bzw. die eine angeformte Innenverzahnung aufweist. Da ein Laufring oder eine Laufbüchse aus Kunststoff im Betrieb möglicherweise einem Verschließ unterliegen, ist es nunmehr möglich, diese Elemente als einfache Verschleißteile bedarfsgemäß auszutauschen, ohne daß dazu die ganze Tragrolle ersetzt werden müßte. Gleichzeitig besteht auch die Möglichkeit, Laufringe oder -büchsen unterschiedlichen Durchmessers und unterschiedlichen Aufbaus auf das gleiche Antriebselement aufzusetzen, um damit den Friktionsdurchmesser und die Reibpaarung auf die jeweiligen Betriebserfordernisse abzustimmen. Die Polyurethan-Laufringe oder -büchsen (Bandagen) brauchen nicht mehr aufvulkanisiert zu werden, da sie sich wegen ihrer Innenverzahnung nicht mehr loswalken können. Durch die geeignete Festlegung der Reibpaarung wird außerdem eine Überlastung des Zahnriemens sicher verhindert.

Im übrigen kann die Anordnung auch derart getroffen sein, daß der Laufring oder die Laufbüchse auf einem Trägerring bzw. eine Trägerbüchse aufgesetzt ist, der bzw. die mit der Innenverzahnung ausgebildet ist. Der Trägerring bzw. die Trägerbüchse können auch aus einem mechanisch widerstandsfähigen Kunststoff, insbesondere Polyamid, bestehen. Auch können der Laufring oder die Laufbüchse mit dem Trägerring bzw. der Trägerbüchse formschlüssig verbunden sein, was bspw. durch eine Außenverzahnung an dem Trägerring bzw. der Trägerbuchse erreicht werden kann.

In der konstruktiven Gestaltung und Ausbildung der Lauf- und/oder Führungselemente bietet die Erfindung jede Freiheit. Beispielsweise kann auch an einem auf das Antriebselement aufgesetzten Lauf- und/oder Führungselement eine Anlaufschulter für das endlose Antriebsmittel ausgebildet sein, so daß sich ein eigenes Führungsteil insoweit erübrigt. Des weiteren können auf einem Tragelement mehrere Laufelemente aufgesetzt sein, wodurch sich auf einfache Weise eine Anpassungsmöglichkeit an verschiedene Skidbreiten ergibt.

Unter dem Begriff "Tragrolle" sind alle Arten von solchen Rollen oder Walzen verstanden, wie sie für die verschiedenartigsten Förderaufgaben in Gebrauch sind. Dazu zählen angetriebene Stau- und Festrollen, Friktionsrollen, Rollen für Skidrollenbahnen und für Paletten oder anderes Stückgut etc.

Die Skidrollenbahn läßt sich insbesondere hinsichtlich der Aufteilung der Antriebskräfte besonders günstig auslegen, wenn an wenigstens einer der Tragrollen drei drehfest miteinander gekoppelte Antriebsverzahnungen vorgesehen sind. Eine derartig ausgebildete Tragrolle erlaubt die Einleitung der Antriebskräfte in einem mittleren Skidrollenbahnabschnitt. Die Anzahl der sich gegenseitig antreibenden Tragrollen wird dadurch erheblich reduziert, wodurch auch die Belastung der die Tragrollen verbindenden Zahnriemen entsprechend geringer ist.

In der Zeichnung sind Ausführungsbeispiele des Gegenstandes der Erfindung dargestellt. Es zeigen, jeweils in einer Seitenansicht, teilweise im axialen Schnitt und in schematischer Darstellung:
- Fig. 1: eine Tragrolle gemäß der Erfindung, in der Ausbildung als Festrolle,
- Fig. 2: eine Tragrolle gemäß der Erfindung für eine Skidrollenbahn,
- Fig. 3: eine Tragrolle gemäß der Erfindung, in der Ausbildung als Staurolle,
- Fig. 4: eine Tragrolle gemäß der Erfindung, in der Ausführung als Staurolle, in einer abgewandelten Ausführungsform,
- Fig. 5: eine Staurolle nach Fig. 3, in ausschnittsweiser Darstellung, in einem anderen Maßstab,
- Fig. 6: eine Einzelheit der Staurolle nach Fig. 4, in einer weiteren abgewandelten Ausführungsform , im Ausschnitt und in einer Seitenansicht,
- Fig. 7: eine Tragrolle gemäß der Erfindung in einer weiteren Ausführungsform,
- Fig. 8: eine Skidrollenbahn mit endseitigem Antrieb in schematischer Darstellung und
- Fig. 9: eine Skidrollenbahn mit einer Tragrolle nach Fig. 7 in schematischer Darstellung.

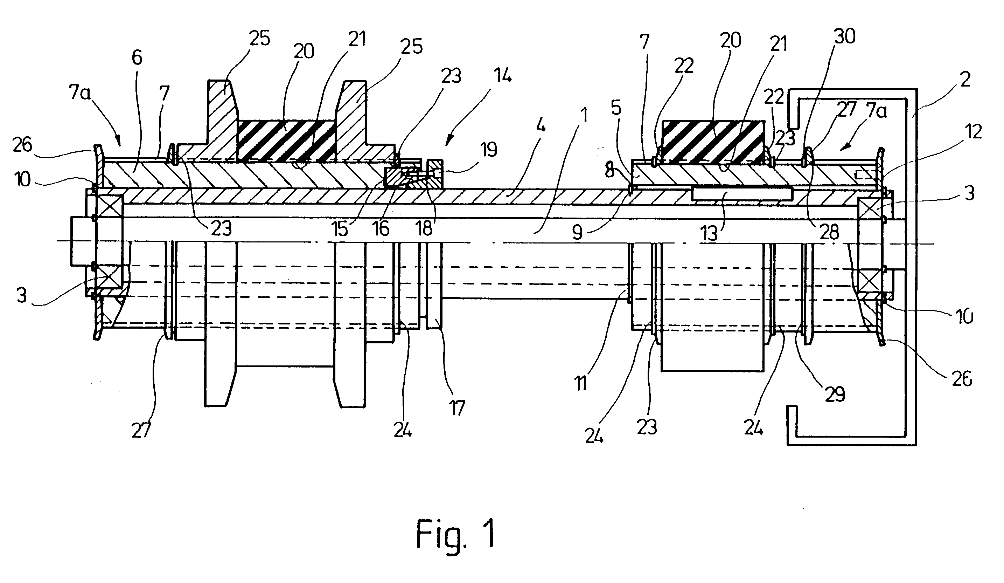

Die in Fig. 1 dargestellte sogenannte Festrolle weist eine durchgehende starre Achse 1 auf, die endseitig in einem Förderbahngerüst verankert ist, von dem lediglich ein Längsträger 2 auf einer Seite angedeutet ist. Auf der zylindrischen Achse 1 ist über zwei Radialwälzlager 3 ein Tragelement in Gestalt eines aus Stahl bestehenden zylindrischen Tragrohrs 4 drehbar gelagert. Auf das Tragrohr 4 sind im Bereiche seiner beiden Enden zwei rohrförmige Antriebselemente 5,6 aufgeschoben, die aus entsprechend abgelängten Abschnitten eines aus Leichtmetall stranggepreßten Profilrohres bestehen. Jedes der zylindrischen Antriebselemente 5, 6 trägt eine über die Länge durchgehende gerade Außenverzahnung 7 und eine ebenfalls angeformte und über die Länge durchgehende Innenverzahnung 8. Es ist im Schiebesitz auf das Tragrohr 4 aufgeschoben und auf diesem durch zwei endseitig angeordnete Sprengringe 9,10 axial fixiert, welche in entsprechend eingestochene, ringsumlaufende Nuten 11, 12 des Tragrohres 4 eingesetzt sind. Eine flache Paßfeder 13, die in die Innenverzahnung 8 des Antriebselementes 5 eingreift, kuppelt dieses drehfest mit dem Tragrohr 4.

Zur drehfesten Verbindung des anderen Antriebselementes 6 mit dem Tragrohr 4 kann grundsätzlich ebenfalls eine Paßfeder entsprechend der Paßfeder 13 verwendet werden. Als Alternative ist in Fig. 1 die Verwendung eines Spannringes 14 zu diesem Zwecke veranschaulicht. Der Spannring 14 weist ein mit dem Antriebselement 6 verbundenes Ringelement 15 auf, das - wie an sich bekannt - eine Kegelfläche 16 trägt und das mit einem auf dem Tragrohr 4 angeordneten geschlitzten Spannelement 17 zusammenwirkt, das eine Keilfläche 18 trägt und über längs seines Umfanges verteilt angeordnete Spannschrauben 19 axial gegen das Ringelement 15 verspannt wird. Dabei findet über die Kegelflächen 16, 18 zugleich eine reibschlüssige Verspannung mit der Außenumfangsfläche des Tragrohrs 4 statt, so daß das Antriebselement 6 drehfest und axial unverschieblich mit dem Tragrohr 4 verspannt ist.

Auf die Außenverzahnung 7 der beiden Antriebselemente 5,6 sind Lauf- und Führungselemente aufgesetzt, die alle mit einer Innenverzahnung versehen sind, die in die Außenverzahnung 7 eingreift und diese Lauf- und Führungselemente drehfest mit dem Antriebselement 5 bzw. 6 kuppelt.

Bei diesen Lauf- und Führungselementen handelt es sich bei dem Antriebselement 5 um einen aus Polyurethan bestehenden, im wesentlichen zylindrischen Laufring 20, dessen angeformte Innenverzahnung bei 21 angedeutet ist und der in Achsrichtung zwischen zwei ebenfalls mit einer Innenverzahnung 21 ausgebildeten Anschlagscheiben 22 sitzt, die ihrerseits axial durch zwei Sprengringe 23 fixiert sind, welche in Nuten 24 eingesetzt sind, die ringsumlaufend in die Außenverzahnung 7 eingestochen sind.

In ähnlicher Weise ist ein solcher aus Polyurethan bestehender innenverzahnter Laufring 20 auf die Außenverzahnung 7 des anderen Antriebselementes 6 aufgeschoben. Er ist auf diesem axial zwischen zwei Bordscheiben 25 gehalten, die, als Führungselemente für Skidkufen dienen und in Achsrichtung auf dem Antriebselement 6 wiederum durch Sprengringe 23 fixiert sind.

Bei beiden Antriebselementen 6, 7 bildet ein von der jeweils außenliegenden Stirnseite ausgehender, mit 7a bezeichneter Abschnitt der Außenverzahnung 7 eine Antriebsverzahnung, in die ein in Fig. 1 nicht weiter dargestellter endloser Zahnriemen eingreift, der das Antriebsmittel bildet. Anstelle eines solchen Zahnriemens könnte auch eine Antriebskette Verwendung finden, um nur eine weitere Möglichkeit zu erwähnen.

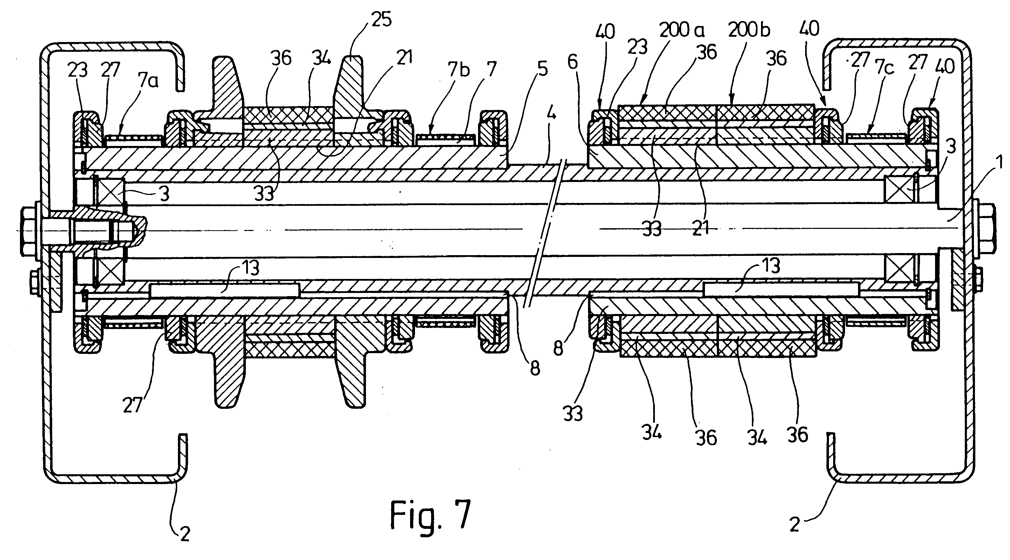

Die Antriebsverzahnung 7a ist beidseitig durch zwei Anlaufscheiben für den Zahnriemen begrenzt, von denen die eine Anlaufscheibe 26 stirnseitig auf das Antriebselement 6 bzw. 7 aufgeschraubt und die andere Anlaufscheibe 27 mit einer Innenverzahnung 28 versehen auf die Außenverzahnung 7 aufgeschoben ist. Zur axialen Fixierung der Anlaufscheibe 27 dient bei dem Antriebselement 5 ein in eine entsprechende Nut 29 eingesetzter Sprengring 30, der - wie in Fig. 6 dargestellt - formschlüssig mit der Anlaufscheibe 27 verbunden ist. Zur Verbesserung der Übersichtlichkeit wurde in den Fig.1 bis 4 auf die Darstellung der axialen Fixierung verzichtet.

Die beiden rohrförmigen Antriebselemente 5,6 sind ersichtlich nicht nur besonders einfach durch entsprechendes Ablängen eines Profilrohres herstellbar, sondern sie ergeben gleichzeitig zusammen mit den auf ihnen angeordneten Laufringen 20,Anschlagscheiben 22, Bordscheiben 25 und Anlaufscheiben 26, 27 einen modularen Aufbau der ganzen Tragrolle, der durch entsprechende Bemessung der Länge des Tragrohrs 4 an jede beliebige Breite der zugehörigen Rollenbahn angepaßt werden kann. Alle Teile sind lösbar miteinander verbunden, so daß nach Entfernen der einzelnen Sprengringe, bspw. 10, 23, verschlissene Elemente abgenommen und einfach ausgetauscht werden können.

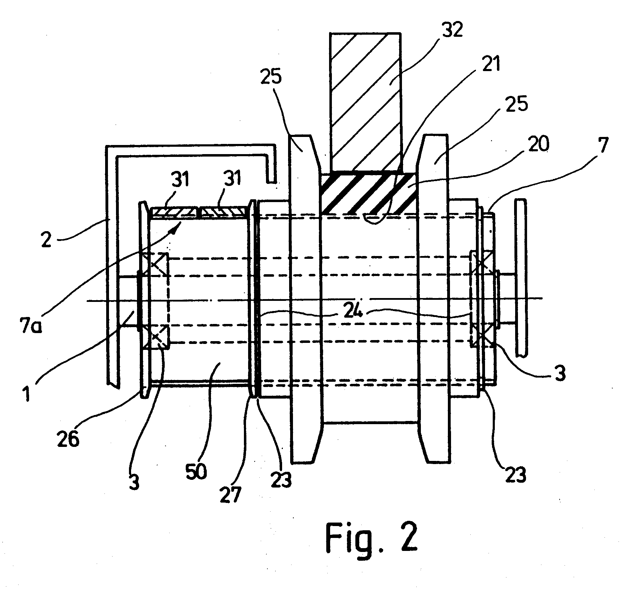

Bei der in Fig. 2 dargestellten Ausführungsform einer angetriebenen Tragrolle für eine Skidrollenbahn, der auf der Gegenseite des Rollenbahngerüstes eine nicht weiter dargestellte Tragrolle, die ebenfalls angetrieben sein kann, zugeordnet ist, ist auf das Tragrohr der Ausführungsform nach Fig. 1 verzichtet. Das rohrförmige Antriebselement 50 bildet unmittelbar das Tragrohr. Es ist mittels der Radialrollenlager 3 auf der Achse 1 unmittelbar gelagert.

Ähnlich wie bei der Ausführungsform nach Fig. 1 ist das Antriebselement 50 durch ein entsprechend abgelängtes Stück eines stranggepreßten Profilrohres gebildet, das die über seine Länge durchlaufende gerade Außenverzahnung 7 aufweist. Die Innenverzahnung 8 der Fig. 1 kann entfallen.

Wie bereits anhand der Fig. 1 erläutert, sind auf das Antriebselement 50 als Lauf- und Führungselemente wiederum der innenverzahnte Polyurethan-Laufring 20 und die beiden ebenfalls innenverzahnten Bordscheiben 25 aufgeschoben, die axial durch die beiden in Ringnuten 24 eingesetzten Sprengringe 23 fixiert sind. Die axiale Länge der Antriebsverzahnung 7a ist in diesem Falle so gewählt, daß zwei Zahnriemen 31 nebeneinander angeordnet werden können.

Die übrigen mit der Ausführungsform nach Fig. 1 übereinstimmenden Teile sind mit gleichen Bezugszeichen bezeichnet und nicht nochmals erläutert. Eine auf dem Laufring 20 laufende Skidkufe ist bei 32 angedeutet.

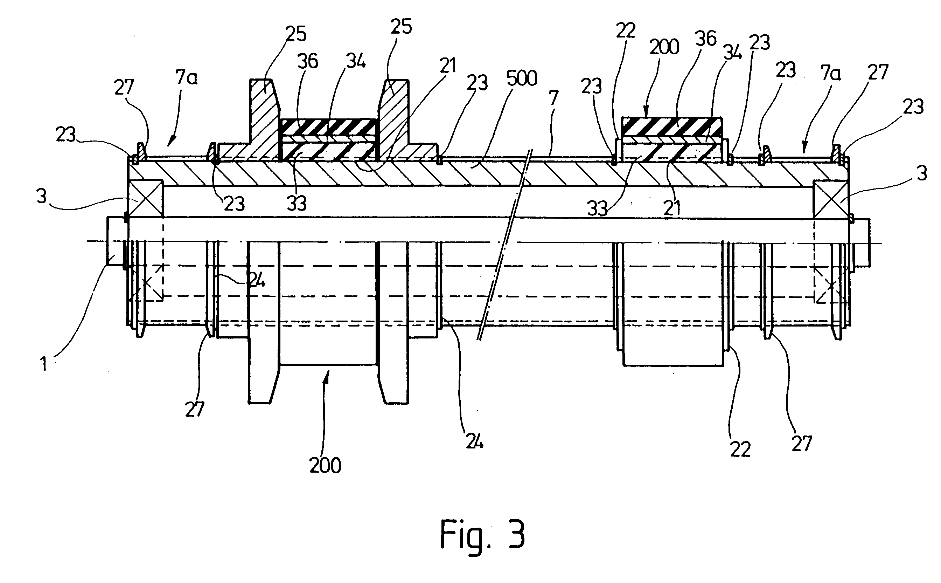

In Fig. 3 ist eine Ausführung der Tragrolle als Staurolle veranschaulicht. Mit der bereits erläuterten Ausführungsform nach Fig. 1 sind gleiche Teile mit gleichen Bezugszeichen versehen. Für ihre Bedeutung wird auf die Erläuterung zu Fig. 1 Bezug genommen.

Bei dieser Ausführungsform übernimmt das durch ein Profilrohr gebildete Antriebselement 500 die Funktion des Tragrohrs 4 nach Fig. 1; es geht aber über die gesamte Breite der Rollenbahn durch. Das Antriebselement 500 ist deshalb mittels der beiden Radialrollenlager 3 unmittelbar auf der Achse 1 drehbar gelagert. Auf seine über die Länge durchgehende gerade Außenverzahnung 7 sind wiederum zwei an ihrer Nabe innenverzahnte Bordscheiben 25 und ebenfalls innenverzahnte Anschlagscheiben 22 aufgesetzt, die in Achsrichtung durch in Nuten 24 eingesetzte Sprengringe 23 fixiert sind. Im Bereiche beider Enden des Antriebselementes 500 sind zwei von der Außenverzahnung 7 gebildete Antriebsverzahnungen 7a vorgesehen, die wiederum beidseitig von innenverzahnten Anlaufscheiben 27 begrenzt sind. Die zugehörigen, die axiale Fixierung der Anlaufscheiben 27 bewirkenden Sprengringe sind mit 30 bzw. 23 bezeichnet.

Entsprechend der Funktion der Tragrolle als Staurolle wirken die beiden auf das Antriebselement 500 aufgesetzten Laufringe 200 hier als Gleitringe. Sie sind mehrschichtig aufgebaut und bestehen jeweils aus einem mit der Innenverzahnung 21 versehenen Trägerring 33 aus einem mechanisch widerstandsfähigen Kunststoff, bspw. Polyamid, auf dem hier ein Ring 34 gleitend geführt ist, der eine günstige Reibpaarung mit dem Trägerring 33 ergibt. Auf den Ring 34 ist schließlich ein Polyurethan-Kautschuk-Ring 36, der gute Kraftübertragungseigenschaften aufweist, aufgegossen. Der Ring 34 kann dabei auch eine Außenverzahnung aufweisen, die eine formschlüssige Verbindung des Polyurethan-Kautschuk-Ringes 36 mit dem Ring 34 gewährleistet.

Wie aus Fig. 3 zu ersehen, ist der eine Laufring 200 wiederum zwischen den beiden Bordscheiben 25 angeordnet, während der andere Laufring 200 zwischen den beiden Anschlagscheiben 22 sitzt, wobei jeweils ausreichendes axiales Spiel vorhanden ist, um sicherzustellen, daß die Laufringe 200 ihre Funktion als Gleitringe erfüllen können.

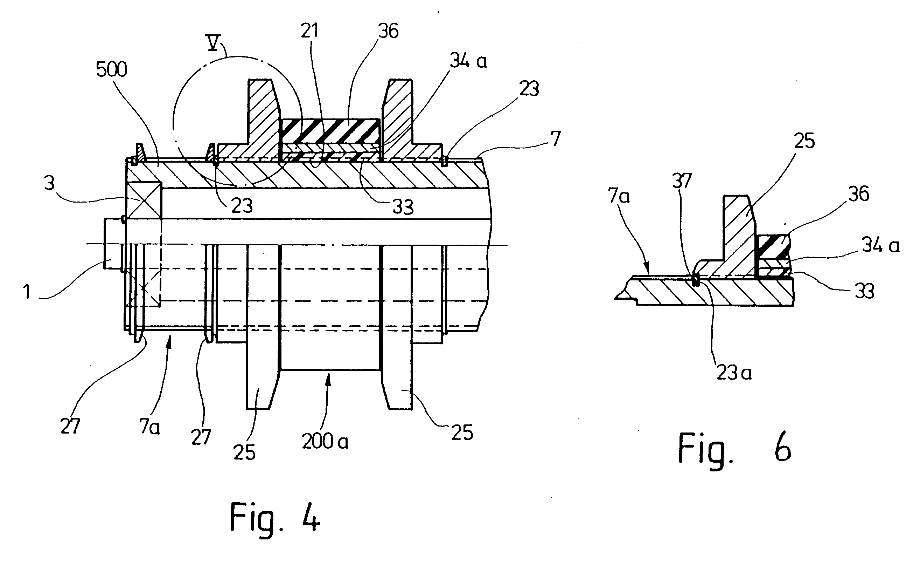

Die in Fig. 4 schließlich dargestellte Ausführungsform einer Staurolle entspricht weitgehend jener nach Fig. 3. Gleiche Teile sind deshalb wieder mit gleichen Bezugszeichen versehen. Sie werden nicht nochmals erläutert.

Abweichend von Fig. 3 ist bei dem Laufring 200a der Polyurethan-Kautschuk-Ring 36 auf einen aus einem geeigneten Kunststoff bestehenden, gegebenenfalls außenverzahnten Ring 34a aufgegossen, der seinerseits auf dem aus Polyamid hergestellten, bei 21 innenverzahnten Trägerring 33 gleitend gelagert ist.

Durch entsprechende Bemessung des Durchmessers und durch entsprechende Materialwahl des Polyurethan-Kautschuks kann erreicht werden, daß die Laufringe 20, 200 und 200a gleichzeitig eine Dämpfung der beim Transport von stückigen Gütern, bspw. Paletten, auftretenden Stöße auf deren Übertragungsweg auf die die Tragrollen antreibenden Zahnriemen bewirken. Der Verschleiß der Zahnriemen wird auf diese Weise wesentlich herabgesetzt.

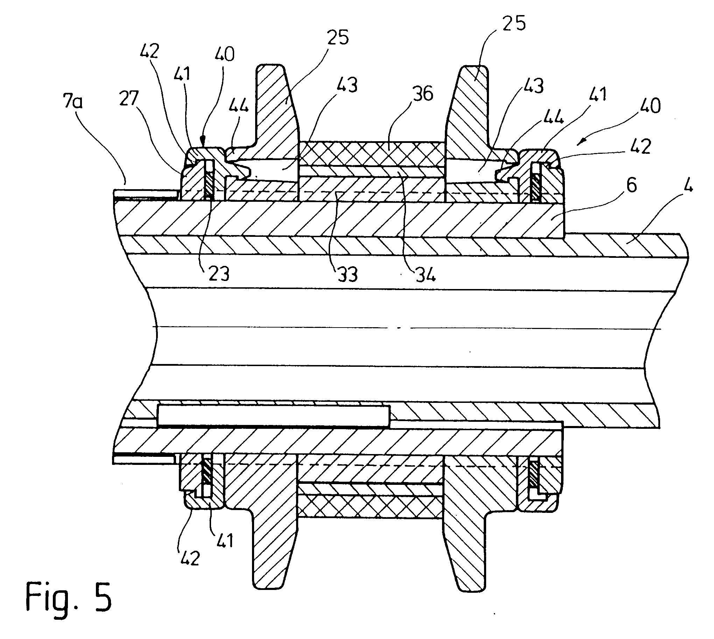

Die zur Führung des Zahnriemens vorgesehene Anlaufscheibe 27 ist, wie in Fig. 5 dargestellt, durch den Sprengring 23 und einen Schnappring 40 axial fixiert. Der Schnappring ist zwischen dem Sprengring 23 und der Bordscheibe 25 auf das Antriebselement 6 aufgesetzt und umgreift mit seinem umgebogenen äußeren Rand 41 radial vorstehende Teile 42 der Anlaufscheibe 27. Außerdem sind zur axialen Fixierung der Bordscheiben 25 in diesen Rastbohrungen 43 vorgesehen, in die von dem Schnappring 40 axial wegstehende Rastfinger 44 eingreifen. Die Rastbohrungen 43 sind im Durchmesser abgestuft, so daß die Rastfinger 44 eine so gebildete Kante hintergreifen.

In Fig. 6 schließlich ist noch eine mögliche Abwandlung der Ausführungsform nach Fig. 4 dargestellt. Die linke Bordscheibe 25 wirkt hier gleichzeitig als Anlaufscheibe für den Zahnriemen, so daß die die zugeordnete Antriebsverzahnung 7a nach innen zu begrenzende Anlaufscheibe 27 der Ausführungsform nach Fig. 3 entfällt. Der die Bordscheibe 25 axial fixierende Sprengring 23a ist dabei in einer stirnseitigen Nut 37 der Bordscheibe 25 angeordnet, so daß diese eine ununterbrochene Anlaufschulter für den Zahnriemen hat.

Ist die Förderanlage für den Transport von Skids unterschiedlicher Breite vorgesehen, sind auf einem entsprechend breit ausgelegten Tragelement 5 mehrere Laufelemente 20 nebeneinander angeordnet. Die Abstände entsprechen den Kufenabständen der zu transportierenden Skids.

In Fig. 7 ist eine Ausführungsform einer als Staurolle ausgebildeten Tragrolle mit zwei nebeneinander angeordneten Laufringen 200a, 200b und insgesamt drei Antriebsverzahnungen 7a, 7b, 7c dargestellt. Der Aufbau entspricht weitgehend der in Fig. 3 dargestellten Tragrolle, so daß für gleiche Teile gleiche Bezugszeichen stehen.

Die in Fig. 7 dargestellte Tragrolle ist als Antriebsrolle vorgesehen und ermöglicht den Antrieb der Skidrollenbahn in einem mittleren Abschnitt. Mit zwei Antriebsverzahnungen, bspw. den Antriebsverzahnungen 7a, 7c, steht die Tragrolle über Zahnriemen in Verbindung mit innerhalb der Förderbahn benachbarten Tragrollen. Über die dritte Antriebsverzahnung 7b und einen darauf laufenden Zahnriemen wird die Tragrolle von bspw. einem Getriebemotor angetrieben. Gegenüber dem Antrieb der Skidrollenbahn von einer endseitig angeordneten Tragrolle sind die Kräfte, die von den die Tragrollen koppelnden Zahnriemen zu übertragen sind, wesentlich vermindert.

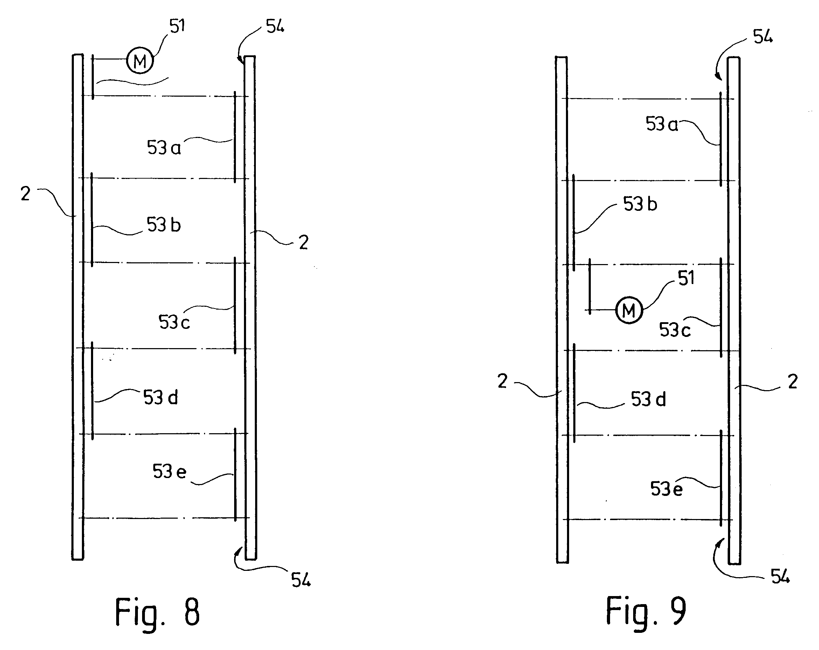

In der Fig. 8 ist eine endseitig angetriebene Skidrollenbahn schematisch dargestellt. Ein Getriebemotor 51 treibt über einen Zahnriemen 52 eine mit einer strichpunktierten Linie angedeutete Tragrolle, die ihrerseits über einen weiteren Zahnriemen 53a die ihr benachbarte Tragrolle antreibt. In dieser Weise wird auch die Antriebskraft über weitere Zahnriemen 53b bis 53e an das Ende der Skidrollenbahn bei 54 übertragen. Die Drehmomente der Tragrollen summieren sich auf, so daß an dem Zahnriemen 53a eine erhebliche Zugspannung auftritt.

Demgegenüber wird bei der in der Fig. 9 schematisch dargestellten Skidrollenbahn das von dem Getriebemotor 51 ausgehende Antriebsmoment in eine mittlere Tragrolle mit drei Antriebsverzahnungen (Fig. 7) eingeleitet. Ausgehend von dieser Tragrolle wird das Antriebsmoment über die Zahnriemen 53b und 53a an eine erste Tragrolle und über die Zahnriemen 53c bis 53e an eine letzte Tragrolle weitergeleitet. Die Anzahl der jeweils in einer Reihe liegenden Tragrollen ist wesentlich geringer als bei der in der Fig. 8 dargestellten Anordnung, so daß die Beanspruchung der Zahnriemen weitaus geringer bleibt.

## Patentansprüche

1. Tragrolle für Förderanlagen, mit einer Achse (1), mit einem auf der Achse über Lagermittel (3) drehbar gelagerten Tragelement (4, 500) und mit einem koaxialen, eine Antriebsverzahnung (7a) zur formschlüssigen Kupplung mit einem endlosen Antriebsmittel aufweisenden Antriebselement für das Tragelement, sowie mit wenigstens einem ring- oder rohrförmigen Lauf- und/oder Führungselement (20, 200, 200a, 25, 27), dadurch gekennzeichnet, daß auf das Antriebselement (5, 6; 50; 500) Lauf- und/oder Führungselemente (20, 200, 200a, 25, 27) aufgesetzt sind, die formschlüssig in eine Außenverzahnung (7) des Antriebselementes eingreifen und die durch Haltemittel (23, 30; 14) axial fixiert sind, und daß die Außenverzahnung (7) des Antriebselementes (5, 6; 50; 500) dessen Antriebsverzahnung (7a) ist.

2. Tragrolle nach Anspruch 1, dadurch gekennzeichnet, daß das Tragelement durch das rohrförmige Antriebselement (50, 500) gebildet ist.

3. Tragrolle nach Anspruch 1, dadurch gekennzeichnet, daß das rohrförmige Antriebselement (5, 6) auf ein das Tragelement bildendes Tragrohr (4) aufgesetzt und mit diesem drehfest und axial unverschieblich verbunden ist.

4. Tragrolle nach Anspruch 3, dadurch gekennzeichnet, daß das Antriebselement (5,6) lösbar mit dem Tragrohr (4) verbunden ist.

5. Tragrolle nach Anspruch 1, dadurch gekennzeichnet, daß das Antriebselement (5, 6, 50, 500) in Gestalt eines zumindest außenverzahnten Profilrohres ausgebildet ist.

6. Tragrolle nach Anspruch 1 oder 5, dadurch gekennzeichnet, daS das Antriebselement (5, 6, 50, 500) ein Strangpreßteil ist.

7. Tragrolle nach einem der vorhergehenden Ansprüche, dadurch gekennzeichnet, daß die Lauf- und/oder Führungselemente eine Innenverzahnung (21, 28 etc.) aufweisen, mit der sie auf dem Antriebselement lösbar angeordnet sind.

8. Tragrolle nach Anspruch 3, dadurch gekennzeichnet, daß das Antriebselement (6) mit dem Tragrohr (4) durch wenigstens einen Spannring (14) verspannt ist.

9. Tragrolle nach einem der vorhergehenden Ansprüche, dadurch gekennzeichnet, dadurch gekennzeichnet, daß auf das Antriebselement (5,6, 50, 500) als Laufelement wenigstens ein aus einem vorbestimmte Reibungseigenschaften aufweisenden Kunststoff bestehender Laufring (20, 200, 200a) oder eine entsprechende Laufbüchse aufgesetzt ist, der bzw. die eine angeformte Innenverzahnung (21) aufweist.

10. Tragrolle nach Anspruch 9, dadurch gekennzeichnet, daß der Laufring an der Gleitfläche mit einem Kunststoff mit guten Gleiteigenschaften und an der Lauffläche mit einem Kunststoff, der gute Kraftübertragungseigenschaften aufweist, versehen ist.

11. Tragrolle nach Anspruch 9, dadurch gekennzeichnet, daß der Laufring auf einen Trägerring (33) aufgesetzt ist, der mit der Innenverzahnung (21) ausgebildet ist.

12. Tragrollenach Anspruch 11, dadurch gekennzeichnet, daS der Laufring mit dem Trägerring formschlüssig verbunden ist.

13. Tragrolle nach Anspruch 11, dadurch gekennzeichnet, daß der Laufring auf dem Trägerring (33) verdrehbar gelagert ist.

14. Tragrolle nach einem der Ansprüche 11 bis 13, dadurch gekennzeichnet, daß der Trägerring (33) aus einem mechanisch widerstandsfähigen Kunststoff besteht.

15. Tragrolle nach einem der Ansprüche 9 bis 12, dadurch gekennzeichnet, daß an einem auf das Antriebselement (5,6, 50, 500) aufgesetzten Lauf- und/oder Führungselement eine Anlaufschulter für das endlose Antriebsmittel ausgebildet ist.

16. Tragrolle nach Anspruch 1, dadurch gekennzeichnet, daß zur Anpassung der Laufbahnbreite mehrere Laufelemente (20) auf ein Tragelement (5) aufgesetzt sind.

17. Tragrolle nach einem der Ansprüche 1 bis 4, dadurch gekennzeichnet, daß an dem Tragelement drei drehfest miteinander gekoppelte Antriebsverzahnungen (7a, 7b, 7c) vorgesehen sind.

## Claims

1. Support roller for conveyor systems, with a shaft member (1), with a support element (4, 500) rotatably mounted on the shaft member via bearing means (3), and with a coaxial drive element for the support element having a drive gearing (7a) for positive coupling with an endless drive means, as well as with at least one annular or tubular race and/or guide element (20, 100, 200a, 25, 27), characterised in that race and/or guide elements (20, 200, 200a, 25, 27) are mounted onto the drive element (5, 6; 50; 500) which positively engage into an external gearing (7) of the drive element and which are fixed axially by holding means (23, 30; 14); and that the external gearing (7) of the drive element (5, 6; 50; 500) is its drive gearing (7a).

2. Support roller according to Claim 1, characterised in that the support element is formed by the tubular drive element (50, 500).

3. Support roller according to Claim 1, characterised in that the tubular drive element (5, 6) is mounted onto a support tube (4) forming the support element and is connected thereto so as to be rotationally fixed and non-displaceable in axial direction.

4. Support roller according to Claim 3, characterised in that the drive element (5, 6) is detachably connected to the support tube (4).

5. Support roller according to Claim 1, characterised in that the drive element (5, 6, 50, 500) is constructed in the form of a profile tube at least with an external gearing.

6. Support roller according to Claim 1 or 5, characterised in that the drive element (5, 6, 50, 500) is an extruded part.

7. Support roller according to one of the preceding claims, characterised in that the race and/or guide elements have an internal gearing (21, 28 etc.) with which they are detachably disposed on the drive element.

8. Support roller according to Claim 3, characterised in that the drive element (6) is restrained with the support tube (4) by at least one clamping ring (14).

9. Support roller according to one of the preceding claims, characterised in that the race element mounted on the drive element (5, 6, 50, 500) is constituted by at least one race ring (20, 200, 200a) or suitable bushing, which is made of plastic having predetermined friction characteristics and which has a moulded-on internal gearing (21).

10. Support roller according to Claim 9, characterised in that the race ring is provided on the sliding surface with a plastic with good sliding characteristics and on the race surface with a plastic with good load transmission characteristics.

11. Support roller according to Claim 9, characterised in that the race ring is mounted onto a carrier ring (33) which is provided with the internal gearing (21).

12. Support roller according to Claim 11, characterised in that the race ring is connected positively to the carrier ring.

13. Support roller according to Claim 11, characterised in that the race ring is mounted on the carrier ring (33) to allow relative rotation.

14. Support roller according to one of Claims 11 to 13, characterised in that the carrier ring (33) is made of a mechanically resistant plastic.

15. Support roller according to one of Claims 9 to 12, characterised in that a run-on shoulder for the end-less drive means is provided on a race and/or guide element mounted onto the drive element (5, 6, 50, 500).

16. Support roller according to Claim 1, characterised in that several race elements (20) are mounted onto a support element (5) for adaptation of the slide way width.

17. Support roller according to one of Claims 1 to 4, characterised in that three drive gearing arrangements (7a, 7b, 7c) coupled to one another so as to be rotatably fixed re provided on the support element.

## Revendications

1. Rouleau porteur pour des installations de transport, comprenant un axe (1), un élément porteur (4, 500) monté en rotation par des moyens de palier (3) sur ledit axe, un élément coaxial d'entraînement pour l'élément porteur, présentant une denture d'entraînement (7a) pour l'accouplement par complémentarité de forme avec un moyen d'entraînement sans fin, ainsi qu'au moins un élément de roulement et/ou de guidage (20, 200, 200a, 25, 27) annulaire ou tubulaire, caractérisé par le fait que sur l'élément d'entraînement (5, 6; 50; 500) sont rapportés des éléments de roulement et/ou de guidage (20, 200, 200a, 25, 27) qui sont en prise par complémentarité de forme avec une denture extérieure (7) de l'élément d'entraînement et sont fixés axialement par des moyens de maintien (23, 30; 14), et que la denture extérieure (7) de l'élément d'entraînement (5, 6; 50; 500) constitue la denture d'entraînement (7a) de ce dernier.

2. Rouleau porteur suivant la revendication 1, caractérisé par le fait que l'élément porteur est constitué par l'élément d'entraînement (50, 500) tubulaire.

3. Rouleau porteur suivant la revendication 1, caractérisé par le fait que l'élément d'entraînement (5, 6) tubulaire est rapporté sur un tube porteur (4) formant l'élément porteur et est relié à ce dernier de manière à en être solidaire en rotation et en translation axiale.

4. Rouleau porteur suivant la revendication 3, caractérisé par le fait que l'élément d'entraînement (5, 6) est relié de façon amovible au tube porteur (4).

5. Rouleau porteur suivant la revendication 1, caractérisé par le fait que l'élément d'entraînement (5, 6, 50, 500) est réalisé sous la forme d'un tube profilé denté au moins extérieurement.

6. Rouleau porteur suivant la revendication 1 ou 5, caractérisé par le fait que l'élément d'entraînement (5, 6, 50, 500) est une pièce extrudée.

7. Rouleau porteur suivant l'une des revendications précédentes, caractérisé par le fait que les éléments de roulement et/ou de guidage présentent une denture intérieure (21, 28, etc.) par laquelle ils sont disposés de façon amovible sur l'élément d'entraînement.

8. Rouleau porteur suivant la revendication 3, caractérisé par le fait que l'élément d'entraînement (6) est relié au tube porteur (4) par au moins une bague de serrage (14).

9. Rouleau porteur suivant l'une des revendications précédentes, caractérisé par le fait qu'au moins une bague de roulement (20, 200, 200a) constituée par une matière plastique présentant des caractéristiques de frottement prédéterminées, ou une douille de roulement correspondante, est rapportée en tant qu'élément de roulement sur l'élément d'entraînement (5, 6, 50, 500), ladite bague ou ladite douille présentant une denture intérieure (21).

10. Rouleau porteur suivant la revendication 9, caractérisé par le fait que la bague de roulement est munie à l'endroit de la surface de glissement d'une matière plastique ayant de bonnes caractéristiques de glissement et à l'endroit de la surface de roulement d'une matière plastique présentant de bonnes caractéristiques de transmission d'effort.

11. Rouleau porteur suivant la revendication 9, caractérisé par le fait que la bague de roulement est rapportée sur une bague de support (33) qui comporte la denture intérieure (21).

12. Rouleau porteur suivant la revendication 11, caractérisé par le fait que la bague de roulement est reliée par complémentarité de forme à la bague de support.

13. Rouleau porteur suivant la revendication 11, caractérisé par le fait que la bague de roulement est montée mobile en rotation sur la bague de support (33).

14. Rouleau porteur suivant l'une des revendications 11 à 13, caractérisé par le fait que la bague de support (33) est constituée par une matière plastique ayant de bonnes caractéristiques de résistance mécanique.

15. Rouleau porteur suivant l'une des revendications 9 à 12, caractérisé par le fait qu'un épaulement de guidage pour le moyen d'entraînement sans fin est formé sur un élément de roulement et/ou de guidage rapporté sur l'élément d'entraînement (5, 6, 50, 500).

16. Rouleau porteur suivant la revendication 1, caractérisé par le fait que plusieurs éléments de roulement (20) sont rapportés sur un élément porteur (5) en vue de l'adaptation de la largeur du chemin de roulement.

17. Rouleau porteur suivant l'une des revendications 1 à 4, caractérisé par le fait que trois dentures d'entraînement (7a, 7b, 7c) mutuellement accouplées pour être solidaires en rotation sont prévues sur l'élément porteur.
